# EUROPEAN PATENT APPLICATION

(11) **EP 1 555 607 A2**
(43) Date of publication of application: **20.07.2005**
(21) Application number: 05100248.3
(22) Date of filing: 17.01.2005
(51) Int. Cl.: G06F 3/12

(54) **Print-on demand methods and systems**

(30) Priority: 16.01.2004 US 759681
(71) Applicant: Xerox Corporation, Rochester, New York 14644 (US)
(72) Inventor: Levine, Jonathan D., Rochester, NY 14609 (US)
(74) Representative: Zimmer, Franz-Josef, Dr.

(57) **Abstract**

A workflow and system for print-on-demand book reproduction novelly creates and stores master book files as solution-independent common normal format files so that master book files are efficiently reproducible by heterogeneous book reproduction workflows and reproduction equipment. The common normal format files are formatted according to an accepted software standard in order to avoid inoperability or poor efficiency with respect to reproduction workflows and reproduction equipment. The workflow and systems convert the common normal format files to equipment specific files for compatibility with the reproduction means. The inventive workflow and system are applicable to all manner of book reproduction, including bound hard copies and electronic books.

## Description

### Field of the Invention

The present invention broadly relates to methods for efficiently and voluminously reproducing books in both hard copy and electronic forms.

### Background of Related Art

Recent advances in computer technology have changed the manner in which books are reproduced, as well as the delivery options available to purchasers. Electronic storage and reproduction allows Book purchasers-whether individuals or large book re-sellers-to receive large and small print-on-demand orders.

Prior art print-on-demand book workflows involve storing digital book files ("master book files," or "master books") representing the cover and book block (content pages) for later reproduction. The book files can be created by a variety of methods, including commercial book publishing software, and scanning and digitally converting hard copy books into computer files. When a copy or copies of the book is (are) requested, the book files are retrieved from memory, arranged in the proper order, and then printed if a hard copy is requested. For electronic copies, the book files are arranged to reproduce the book, and then delivered to the appropriate destination (e.g., over a communication link such as a wide area network), or made available for retrieval by authorized users.

One noticeable problem with prior art print-on-demand book publishing methods is that while master book files created by one particular publisher/content provider can be efficiently reproduced as books by the same entity because the software or hardware has been designed for the particular needs of the content provider, the master book files may not be efficiently reproduced by another entity wherein software and hardware might differ. The reproduced book-if it is even reproducible by the non-creating entity-may include differences from what was originally intended that are commercially unacceptable. These problems have also been observed even when the original content provider and the reproducing entity employ the same basic book publishing software, since the software has often been modified to fit the needs and eccentricities of the particular user, and the files often contain formatting unique to the particular user. The differences in book reproduction workflows are often unintentional, but rather, the result of independent development and modification in response to the environment and demands of the particular user.

Books created for print-on-demand applications are generally mastered (i.e. run through a prepress process), placed in a repository, and then printed, bound and trimmed when an order for the book arrives. The problem has been that due to the nature of existing technology, a book must be mastered for a specific set of production equipment. If any of the production equipment changes (i.e. the cover printer, the book clock printer, the binder, and sometimes the trimmer), it will very likely be necessary to re-master the book. In addition, and as a further complication, any changes to the physical output such as paper weight, paper color, image reduction, etc., can also necessitate re-mastering.

Re-mastering is very complex and takes time and effort. Ideally it requires the original, pre-mastered book to be kept available. But it is common that original books are not kept. Therefore, a complicated and sometimes i mpossible de-mastering effort must be undertaken in order to get the mastered book into a state where it can be re-mastered.

There are many reasons why the production equipment may change, One is that the site may have more than one set of equipment for producing books and one or another may be used based on various factors such as current equipment loads, scheduled maintenance, size of the order, or broken equipment. A more ironic situation occurs when a business must purchase new book production equipment because it has run its business correctly and is growing. But the act of purchasing the new equipment can make its most important asset, its repository of mastered print-on-demand books, obsolete and unusable because they will not print, bind and/or trim correctly or efficiently on the new equipment. Many customers require third-party assistance with de-mastering of books in order to accommodate new equipment changes.

The prior art methods of print-on-demand book reproduction can therefore be described as solution-dependent methods. As a result, several versions of the same master book files are often stored in order to a ccommodate the unique reproduction needs of multiple foreseeable end users. This is both taxing to system resources as well as plain inefficient. And, if a book requires changes (such as a new copyright page, for example), it also presents configuration control problems because the user must remember to put the new copyright page in each version and proof each version to ensure that it can be correctly manufactured.

What is therefore needed but nonexistent in the prior art, is a robust workflow for creating and reproducing books that efficiently operates with many different types of reproduction systems, while allowing a true, accurate copy of an original or "master" to be reproduced, delivered or made accessible.

### SUMMARY OF THE INVENTION

In view of the above-identified problems and limitations of the prior art, the present invention provides a print-on-demand method for creating and reproducing books by heterogeneous systems. A solution to the problems identified above that is further described herein is to maintain digital books in an un-mastered state as a "common normal format," then, after an order is placed for production of a book, a determination can be made as to the type of equipment will be used to produce the book. The book can then be automatically mastered, utilizing relevant attributes, for the specific set of equipment.

In accordance with features of the present invention, a method is described that shows the steps of receiving as book files from a remote print-on-demand repository, a digital representation of a book in "common normal format" and targeted for reproduction, automatically converting the book files from common normal format into "equipment specific format," which is are solution-dependent formatted book files to match the needs of a book reproduction system, and reproducing said book from information comprised by said solution-dependent formatted book files. The digital book represented by the equipment specific format can be submitted for production or stored for future use, or both.
In a further embodiment step d) comprises the step of:
acquiring or generating hard copy book production information.
In a further embodiment said book production information comprises printing information.
In a further embodiment said book production information comprises binding information.
In a further embodiment step d) further comprises the step of:
via a Raster Image Processor, creating a bitmap of the book block.
In a further embodiment step d) further comprises the step of:
via a Raster Image Processor, creating a bitmap of the book cover.
In a further embodiment step d) further comprises the step of:
acquiring or generating hard copy book production information.
In a further embodiment for electronic books, said book production information comprises security information.
In a further embodiment for electronic books, said book production information comprises viewing capabilities.
In a further embodiment for electronic books, said book production information comprises printing capabilities.
In a further embodiment step e) comprises for electronic books, the step of:
providing access to said book via an electronic link to a data network.
In a further embodiment step e) comprises for electronic books, the step of:
delivering said book to a predefined destination.

In accordance with another feature of the present invention, provided is a print-on-demand book reproduction system for creating and reproducing books by heterogeneous reproduction workflows. The system at least includes a book file generator adapted to generate a digital representation of a book targeted for reproduction, a solution-independent converter adapted to convert said book files to have a solution-independent, intermediate format, and a book file memory adapted to store solution-independent, intermediate formatted book files along with book identification information as a mastered book. The system also at least includes an automatic prepress converter adapted to convert solution-independent, intermediate formatted book files into solution-dependent formatted book files to match the needs of a book reproduction workflow utilized, and a book reproducer adapted to reproduce said book from information comprised by said solution-dependent formatted book files.
In a further embodiment said book in step a) is originally in the form of a hard copy, and said book file generator further comprises:
a book scanner adapted to scan the components of said book; and
a scanned component converter adapted to convert scanned components of said book into said digital representation.
In a further embodiment said book identification information comprises the book title.
In a further embodiment said book identification information comprises the book author.
In a further embodiment said book identification information comprises the book publisher.
In a further embodiment said book identification information comprises the International Standard Book Number.
In a further embodiment said book identification information comprises the book publishing date.
In a further embodiment said equipment specific format converter comprises:
a book production information generator adapted to generate hard copy book production information.
In a further embodiment said book production information comprises printing equipment information.
In a further embodiment said book production information comprises binding equipment information.
In a further embodiment said equipment specific format converter comprises:
a Raster Image Processor adapted to create a bitmap of the book block.
In a further embodiment step d) further comprises the step of:
a Raster Image Processor adapted to create a bitmap of the book cover.
In a further embodiment said equipment specific format converter comprises:
a book production information generator adapted to generate hard copy book production information.
In a further embodiment for electronic books, said book production information comprises security information.
In a further embodiment for electronic books, said book production information comprises viewing capabilities.
In a further embodiment, for electronic books, said book production information comprises printing capabilities.
In a further embodiment said book reproducer comprises for electronic books:
an electronic link adapted to provide access to said book.
In a further embodiment said book reproducer comprises for electronic books:
an electronic link adapted to deliver said book to a predefined destination over a data network.

In accordance with yet another feature of the present invention, the automatic prepress converter can automatically convert book files from common normal format into equipment specific format. The common normal format can include files stored in eXtensible Markup Language (or "XML") format. The system can automate the conversion process by providing a user interface that enables the conversion after user selection of a single button located on the systems user interface.

The present invention is now described in detail below, with reference to the drawings.

### BRIEF DESCRIPTION OF THE DRAWINGS

Features and advantages of the present invention will become apparent to those skilled in the art from the following description with reference to the drawings, in which:

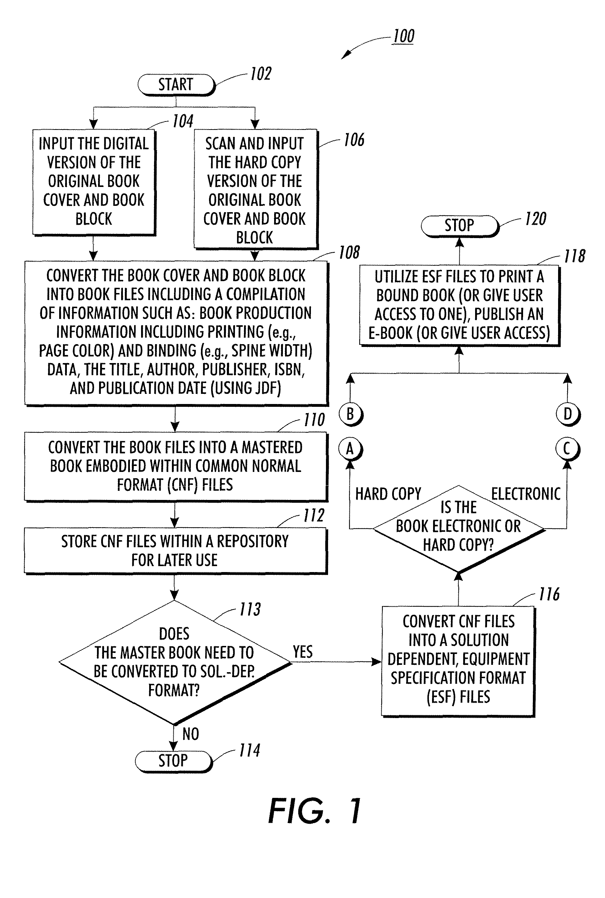

Figure 1 is a flowchart detailing the general book mastering and reproduction workflow of the present invention;

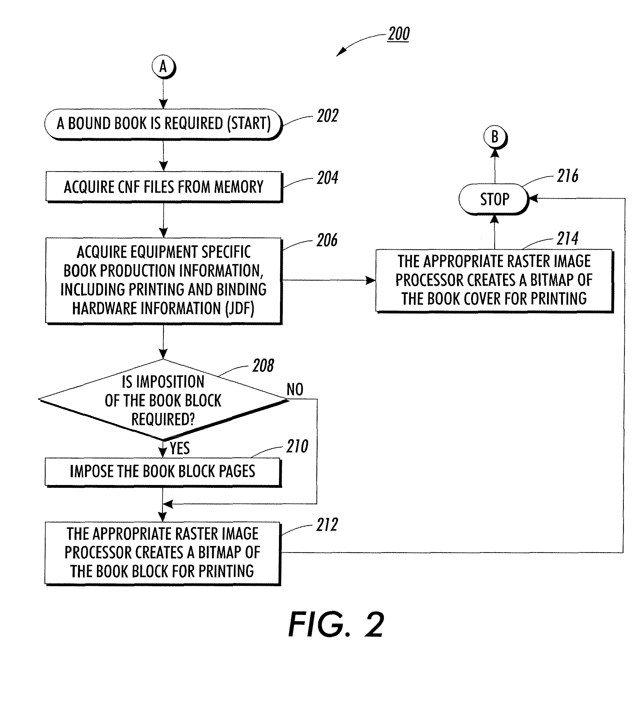

A subset of the flowchart in Figure 1, Figure 2 is a flowchart detailing the workflow for converting solution-independent master book files in Common Normal Format into solution-dependent master book files in Equipment Specific Format, as needed, for hard copy reproduction;

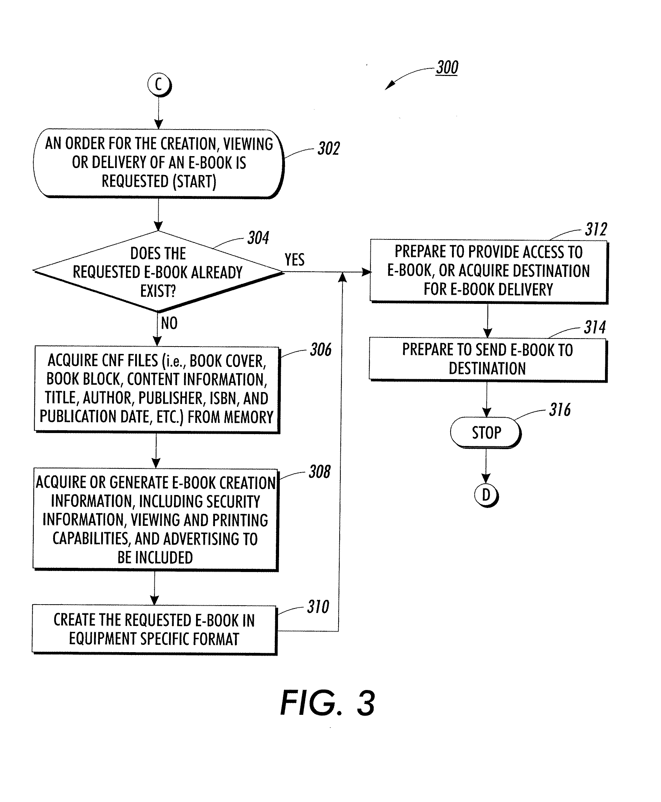

Also a subset of the flowchart in Figure 1, Figure 3 is a flowchart detailing the workflow for converting solution-independent master book files in Common Normal Format into solution-dependent master book files in Equipment Specific Format, as needed, for electronic book ("e-book") reproduction; and

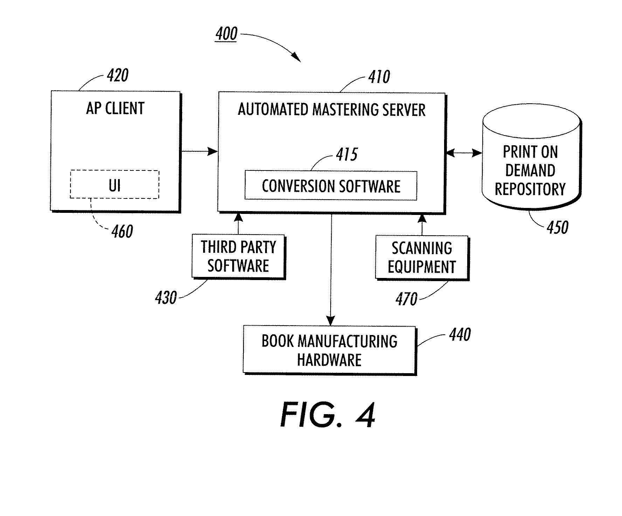

Figure 4 is a block diagram illustrating modules/components that form an "automated prepress system" in accordance with unique aspects of the present invention.

### DETAILED DESCRIPTION OF THE PREFERRED EMBODIMENTS

Figure 1 details the present-inventive workflow adapted to provide a universal book reproduction system for on-demand electronic book retrieval, or bound book printing. The present invention addresses and solves the problems presented by the prior art. With reference to the description, *infra*, it should be noted that the software used for general book publishing can be one or more of a number of commercially available ones. These include such software packages as Abode Systems' PostScript™ and PDF™, and many others.

The comprehensive on-demand book reproduction workflow 100 of the present invention begins at Step 102. This is followed by inputting the contents of a particular book into memory (Steps 104 or 106). The contents include, *inter alia*, the book cover and "book block." The term "book block" refers to the content pages of the book. Step 104 applies when the book is already in digital form, while Step 106 applies when the original book is in hard copy form. The latter step involves scanning the cover and pages of the book using a commercially available optical scanner, and then converting the analog image to a digital representation.

Step 108, the next step, converts the book files obtained in Steps 104 or 106 into book files including a compilation of information such as: book production information including printing (e.g., page color) and binding (e.g., spine width) data, the title, author, publisher, ISBN, and publication date. This compilation of information is gathered in Job Definition Format (JDF). The book files are then converted into a Mastered Book embodied within a Common Normal Format (CNF) files as shown in step 110. The Common Normal Format is a universal format, devoid of any particulars unique to the administration of the system or rendering equipment. In Step 112 the workflow stores the CNF files within a repository. In the preferred embodiment, the master book files comprise all of the files and information stored in Step 110, although it will be appreciated by those skilled in the art that there are a number of variations on what may constitute the actual "master book" files.

Some book reproduction users may have reproduction hardware and software that can r eproduce t he s olution-independent master b ook f iles d irectly without a ny conversions, while other reproduction users may require that the CNF files be converted to suit their particular requirements. Therefore, Step 113 makes an inquiry as to whether the solution-independent master book files need to be converted to solution-dependent Equipment Specific Format (ESF) files. If the conversion is necessary, the algorithm advances to Step 116. If not, the workflow terminated the process as shown in step 114 and the master book files remain stored in a repository for later use if required.

The conversion of the CNF files to ESF files is carried out by subroutine 200 shown in Figure 2 for books intended to be delivered as bound hard copies. The conversion of the solution-independent master book files to solution-dependent master book files, however, is carried out by subroutine 300 as shown in Figure 3 for books intended to be delivered as electronic books ("e-books"). These steps are discussed below.

When a bound book is requested for the book reproduction, the subroutine 200 is triggered at Step 202. The workflow acquires the CNF files from memory as shown in Step 204. This is followed by acquiring or generating the appropriate equipment-specific production information in Step 206 (i.e. via workflow-specific JDF definitions). Book equipment-specific p roduction information is that information necessary for accurately printing and binding of the book using a particular set of book-manufacturing equipment. Also following Step 204, a Raster Image Processor (RIP) creates a bitmap representation of the book cover for printing in Step 214.

In Step 208 the workflow determines whether the book block needs to be "imposed;" i.e., placed in the proper sequence and layout for reproduction. If book block imposition is needed, it is performed in Step 210. Otherwise, the workflow advances to Step 212, where the Raster Image Processor creates a bitmap representation of the book block. The bitmap representations from Steps 214 and 212 are sent to the printer or printers for printing the requested hard copy. Thereafter, the subroutine stops at Step 216 and returns to Step 116 of the main workflow 100 in Figure 1. Imposition, if required, can also take place after the RIP step (as described in more detail below).

When an e-book is requested for viewing or delivery, the subroutine 300 in Figure 3 is triggered at Step 302. If the master book files for the requested book already exist, they are provided to the requester (Steps 304, 312 and 314). If not, the workflow acquires the solution-independent master book files from memory (Steps 304 and 306). Next, the subroutine acquires or generates e-book creation information such as the viewing and printing capabilities of the requester, advertising to be included with the e-book delivery and security information used to control access to the book.

The requested e-book is created from the CNF files and placed in a predefined format including equipment specific information, when needed, capable of being accessed by the requester in Step 310. The subroutine then prepares to give the requester access to the e-book (e.g., via the Internet or other wide area network) in Step 312, or prepares to transmit the e-book (e.g., via an Internet web page or e-mail attachment, etc.) in Step 314.

Returning to Figure 1, in Step 118 the workflow reproduces the ESF master files in the requested form. The workflow then finishes at Step 120.

Referring to Figure 4, a block diagram illustrating components of an automated prepress system 400 in accordance with features of the present invention is shown. At the heart of the system 400 is an automated mastering server 410, which contains conversion software 415, and wherein book conversion requests are received from automated prepress client 420. Third party software 430 can be incorporated into the conversion process, as needed, and coordination with book manufacturing hardware 440 is also coordinated by the server 410. Books that are subject to processing within the system 400 are retrieved from a print on demand repository 450. The automated prepress system 410 performs the conversion of a book from its common normal format (CNF) to an equipment specific format (ESF).

To initiate automated mastering, the user of the automated prepress client 420 (which may be a person or an automated order-entry / job submission system) submits a conversion request at an associated user interface 460. The automated prepress client 420 and user interface 460 can each, or both, be located remotely from the automated mastering server 410. Scanning equipment 470 can also be included in the system. Scanning equipment necessary to acquire images of a book include a book scanner for capturing scanned components and a scanned component converter adapted to convert scanned components of said book into said digital representation.

It should be appreciated that communication can be provided between components over a data n etwork (not shown) utilizing communications means and mediums known in the art. Conversion is defined by the automated prepress workflow described with respect to the methods set forth in Figures 1-3. The structure that contains the conversion specification is defined by the automated prepress workflow. The automated prepress server's 410 API enables other applications or system to use its functionality.
The automated prepress server's 410 API also support conversion requests and application prepress system 400 functionality. A Job Definition Format (JDF) is used to transmit and control the flow of data among system components and subcomponents.

Variations and modifications of the present invention are possible, given the above description. However, all variations and modifications which are obvious to those skilled in the art to which the present invention pertains are considered to be within the scope of the protection granted by this Letters Patent.

For example, while the present-inventive workflow has been described for a book reproduction-on-demand environment, other environments are also suitable, such as those involving "just-in-time" inventory practices (also referred to as "book-in-time" for book inventories).

## Claims

1. A print-on-demand method for creating and reproducing books by heterogeneous systems, said method comprising the steps of:
a) receiving as book files, a digital representation of a book targeted for reproduction;
b) converting said book files including book production information and book identification information into a common normal format (CNF) files that are solution-independent;
c) storing the CNF files as a mastered book;
d) converting the CNF files into equipment specific format files that match the needs of a book reproduction system; and
e) reproducing said book from information comprised by said equipment specific format files.

2. The method in Claim 1, wherein said book in step a) is originally in the form of electronic files.

3. The method in Claim 1, wherein said book in step a) is originally in the form of a hard copy, and step a) further comprises the steps of:
scanning the components of said book; and
converting scanned components of said book into said digital representation.

4. The method in Claim 1, wherein said book identification information comprises the book title.

5. The method in Claim 1, wherein said book identification information comprises the book author.

6. The method in Claim 1, wherein said book identification information comprises the book publisher.

7. The method in Claim 1, wherein said book identification information comprises the International Standard Book Number.

8. The method in Claim 1, wherein said book identification information comprises the book publishing date.

9. A print-on-demand system for creating and reproducing books by heterogeneous reproduction workflows, said system comprising:
a book file generator adapted to generate a digital representation of a book targeted for reproduction into book files;
a common normal format converter adapted to convert said book files and book identification information into a common normal format that is solution-independent;
a book file memory adapted to store common normal format files as a mastered book;
an equipment specific format file converter adapted to convert common normal format files into a equipment specific format matching the needs of a book reproduction equipment being utilized to reproduce the book; and
a book reproducer adapted to reproduce the book from information comprised by the equipment specific format files.

10. The system in Claim 9, wherein said book in step a) is originally in the form of electronic files.
